# EUROPEAN PATENT APPLICATION

(11) **EP 2 876 584 A2**
(43) Date of publication of application: **27.05.2015**
(21) Application number: 14193314.3
(22) Date of filing: 14.11.2014
(51) Int. Cl.: G06N 3/00

(54) **Method and system for creating an intelligent digital self representation**

(30) Priority: 25.11.2013 US 201314089623
(71) Applicant: Palo Alto Research Center Incorporated, Palo Alto, California 94304 (US)
(72) Inventor: Brdickza, Oliver, Mountain View, CA California 94304 (US); Roberts, Michael, Los Gatos, CA California 95033 (US); Gunning, David R., Palo Alto, CA California 94306 (US)
(74) Representative: Lord, Michael

(57) **Abstract**

One embodiment of the present invention provides a system for advising a user. During operation, the system generates a set of rules for a digital representation of the user. Next, the system obtains data indicating the user's digital trace, wherein the digital trace is a data trail associated with the user's interactions in a digital or physical environment. The system then applies the rules to the obtained data to generate warnings and/or recommendations. The system subsequently communicates the warnings and/or recommendations to the user.

## Description

### BACKGROUND

### Field

The present disclosure relates to data management assistants. More specifically, this disclosure relates to a method and system that assist users in managing digital information, data privacy, and their overall well-being.

### Related Art

As people's lives and interactions between people become more digitized, and the amount of digital information increases at an accelerating rate, managing data and privacy becomes increasingly challenging. People post information about their social networks, share news via Twitter, and record and broadcast live streams of their experiences on Google glass. This proliferation of digital data causes a number of problems with managing digital information and data privacy for users.

First, a user's data is usually distributed and isolated among a number of different services. It is unlikely that these services (which may compete with each other) will share the data and construct a unified representation to efficiently reason about the user. There is no global view on the user's data to facilitate efficient and useful reasoning. Second, it can be difficult to know what entities have access to a user's data, and the user may want to protect the integrity of his/her data. Finally, the user should receive the right information at the right time, but typically cannot receive such information when he/she needs it the most. The user should receive the most relevant information at the most opportune times to further his/her goals. Unfortunately, people can sometimes receive information at the wrong time and they do not know how to make good decisions based on the overwhelming amounts of data they receive.

The constantly increasing amount of digital information about users does not make these problems easier to solve, but actually makes these problems harder due to increased complexity. Until now, there has been no solution to these problems.

### SUMMARY

One embodiment of the present invention provides a system for advising a user. During operation, the system generates a set of rules for a digital representation of the user. Next, the system obtains data indicating the user's digital trace, wherein the digital trace is a data trail associated with the user's interactions in a digital or physical environment. The system then applies the rules to the obtained data to generate warnings and/or recommendations. The system subsequently communicates the warnings and/or recommendations to the user.

In a variation on this embodiment, obtaining data indicating the user's digital trace includes receiving data indicating that the user is accessing a location and/or service on the Internet, other network, or in a physical environment. The system then obtains copies of the data that the user is submitting to the location and/or service, and the system adds the obtained data to a semantic graph and/or stores the obtained data in a personal imprints storage.

In a variation on this embodiment, the system modifies the set of rules based on results of analyzing rule success and/or rule usage.

In a variation on this embodiment, the system filters data items for presentation at an appropriate time, and presents and/or recommends the data item to the user at the appropriate time.

In a variation on this embodiment, the system receives data indicating that the user is accessing a location and/or service on the Internet, other network, or in a physical environment. The system then determines the privacy policy of the location and/or service. Next, the system determines that the privacy policy of the location and/or service does not match the user's privacy preferences, and the system informs the user of the non-matching privacy policy.

In a variation on this embodiment, the system receives data indicating that the user is planning to perform an activity, and communicates a suggestion to the user to alter or supplement the activity.

### BRIEF DESCRIPTION OF THE FIGURES

FIG. 1 presents a block diagram illustrating an exemplary architecture of an intelligent digital self system, according to an embodiment.
FIG. 2 presents a block diagram illustrating an exemplary communication with the digital self, according to an embodiment.
FIG. 3 presents a flowchart illustrating an exemplary process for generating intelligence components, according to an embodiment.
FIG. 4 presents a flowchart illustrating an exemplary process to facilitate self-awareness, according to an embodiment.
FIG. 5 presents a flowchart illustrating an exemplary process to filter data items with privacy awareness, according to an embodiment.
FIG. 6 illustrates an exemplary computer system executing a digital self, in accordance with an embodiment.
In the figures, like reference numerals refer to the same figure elements.

### DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

Embodiments of the present invention solve the problem of managing information, privacy, and personal well-being by filtering a user's access to the digital world and collecting information about the user and the digital world to advise the user on managing data, privacy, activities, and life. The advising and data collection is performed by an intelligent digital self that contains the user's digital identity and is a digital image of the user in the digital world. This digital image can contain digital and physical sensor data about the user.

An intelligent digital self (also referred to simply as digital self) is a personal assistant that manages the user's interactions with the digital world and acts as a filter and proxy for the user when he or she accesses the digital world. The digital world includes the Internet and any other networks and/or communicatively coupled devices. The digital self encapsulates the user's private information and preferences and acts as a filter between the digital world and the user. The digital self can become "alive" through the use of data mining, machine learning, and human behavior modeling techniques, and may be represented by an avatar that interacts with the user and acts as a counselor and manager/representative of the user's interests.

The digital self may observe a user's digital interactions, learn about the user, and recommend actions that are in the best interests of the user. Digital interactions include all of the user's activity related to digital devices, online, mobile, and other network-related or Internet-related activity. It may provide information to help with daily activities and give holistic advice relating to the user's happiness and well-being. It may capture and integrate all of a user's digital records, including information from various devices and services, to gain an understanding of the user's preferences and personal data. It can create an integrated model of the user, his/her data, and life. It can model the user's information usage, activities, contacts, personality, health, physical characteristics, and psychological well-being. It can apply regression to determine the user's decision-making process and predict the user's behavior. The digital self can also use machine learning methods to learn from large-scale user usage patterns and improve itself over time.

A child user can receive a digital self when he/she is born, and the digital self's knowledge grows over time. The digital self observes a user as he or she grows up, and is always available to advise the user. The digital self monitors the user's digital interactions and learns the user's personality. It can learn the user's emotions, memories, habits, and decision-making process. The digital self evolves with the user, learning more about the user as the user progresses through life. It is a constant companion. The digital self can optionally continue to exist even after the death of the user. The user owns the digital self and can access, alter, and destroy the digital self anytime.

The digital self contains the user's private information, and tracks where the user distributes his or her personal information in the digital world, including constraints associated with the personal information. The user may submit data to a website, and the digital self can store data to track where the data has been submitted. It can warn the user when the user's privacy preferences are inconsistent with a service the user is using. For example, when a user is accessing a website and filling in personal information, the digital self may detect an inconsistency between the user's privacy preferences and the website's privacy policy. Although the user is unaware of the website's privacy policy, the digital self can alert the user of the undesirable privacy policy.

The digital self can also filter information in the digital world, and then store the information until some future time at which the information becomes useful. The digital self may present the information to the user when the user can use the information the most. Note that digital self 102 may also serve as a proxy server anonymizing a user's traces of online activity. The anonymization may include different levels of high-level user activity that the system reports back to advertisers.

One way the digital self can learn about the user is through the user's digital traces. A digital trace is a data trail left behind by the user's interactions in a digital or physical environment. For example, data traces may include data trails created when the user uses a mobile phone, browses the Internet, sends an e-mail, chats online, send a text message through a mobile phone, tweets a message, posts on a social networking page, takes a digital picture, or purchases a product online. All digital activity goes through the digital self, including Internet access, e-mail, etc. Similarly, interactions in a physical environment will be captured by the digital self, such as physical activity patterns recorded through fitness trackers like FitBit.

The disclosed digital self is fundamentally different than existing personal assistants or avatars. Some of these assistants focus on accomplishing tasks for the user (e.g., Siri), with the vision to create a virtual secretary that schedules meetings, organizes trips, communicates with contacts etc. This includes, to a limited extent, the mining of the user's personal data and behavior traces. Recent personal assistants, like Saga, attempt to become more contextual by constructing a personal preference profile of the user based on location traces and tailor recommendations based on it.

However, both intelligent and contextual assistants do not have a physical representation incorporating the user's data, nor do they act as its gate-keepers. In contrast to intelligent and contextual assistants, embodied agents (e.g., see http://en.wikipedia.org/wiki/embodied_agent) do have a physical representation like an avatar. Recent examples include Botega which is an intelligent virtual agent that answers questions. However, current examples do not incorporate or completely represent the user's data and/or digital identity, nor do they act as privacy protectors or gate-keepers.

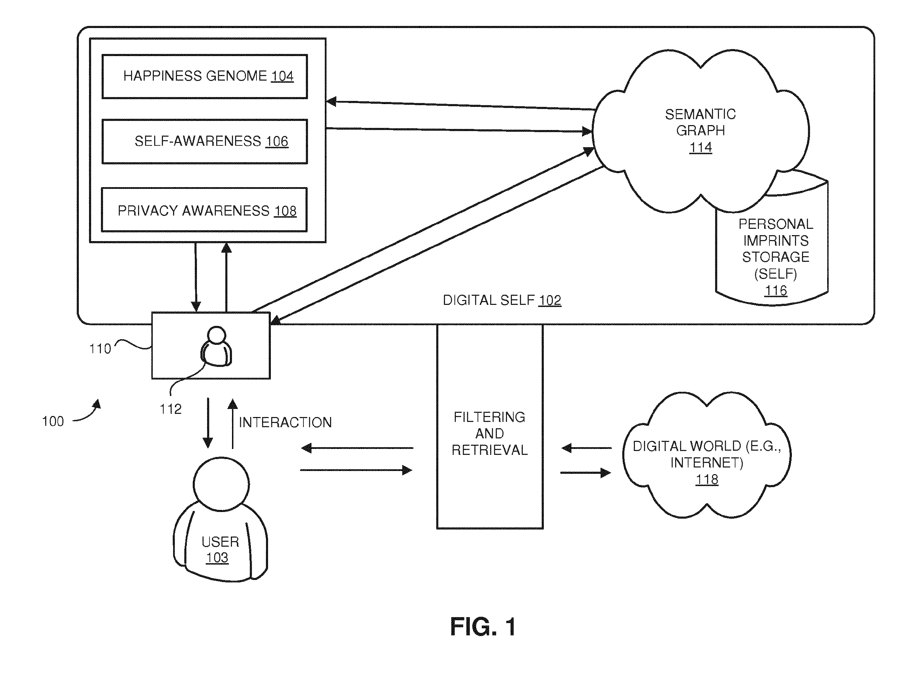

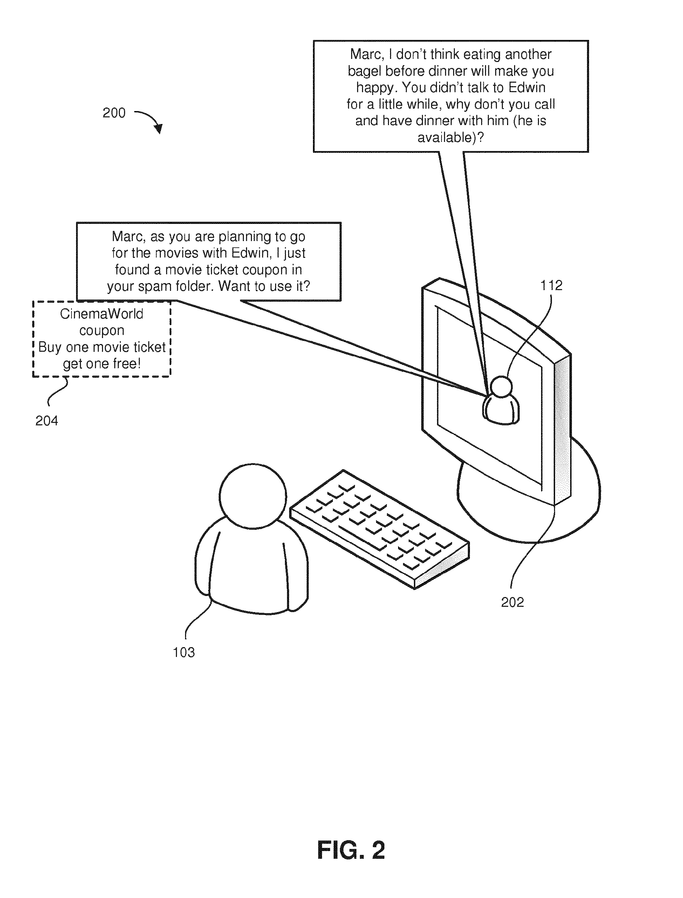

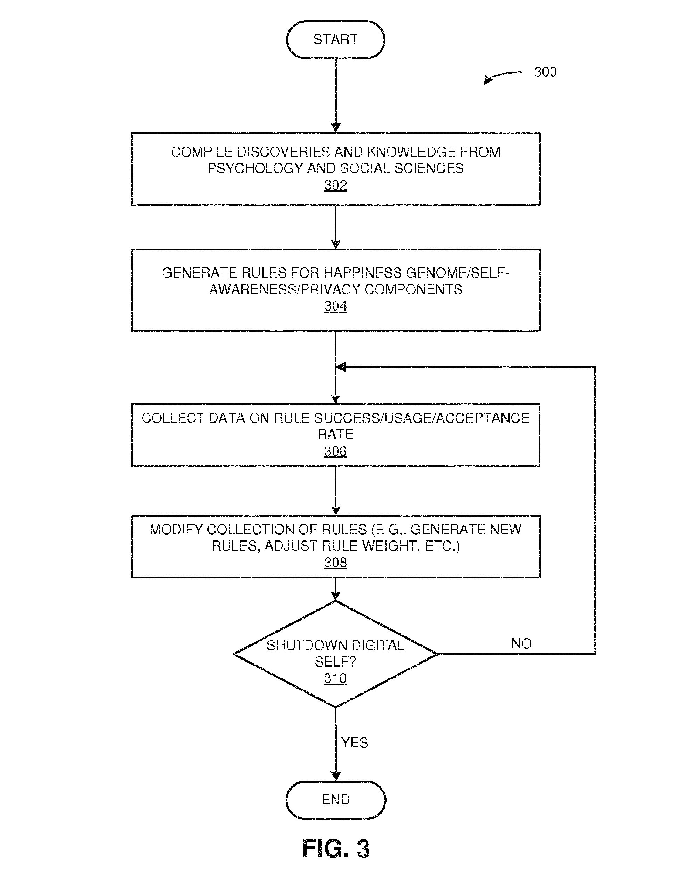

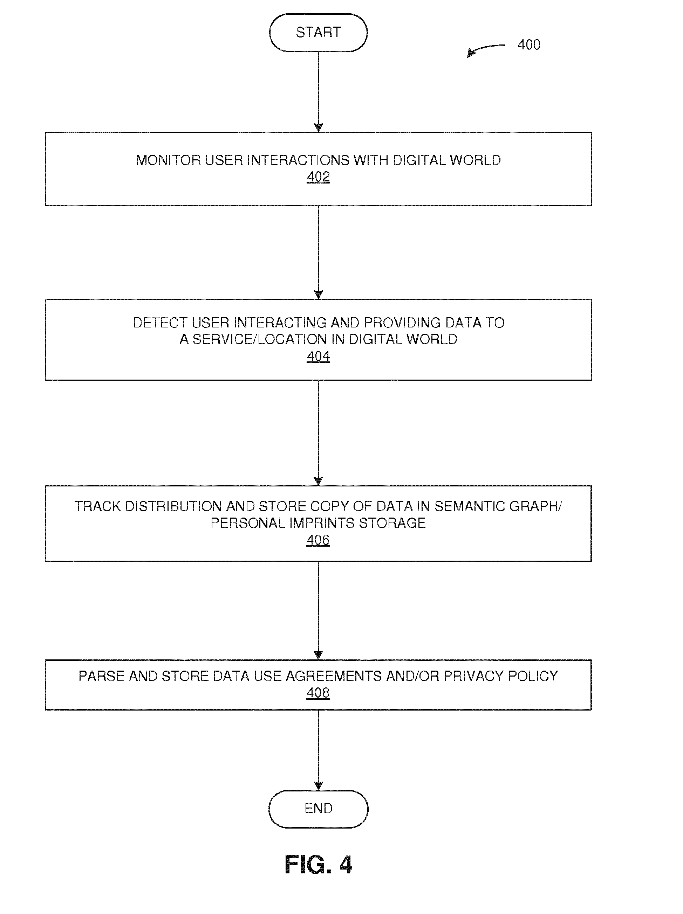

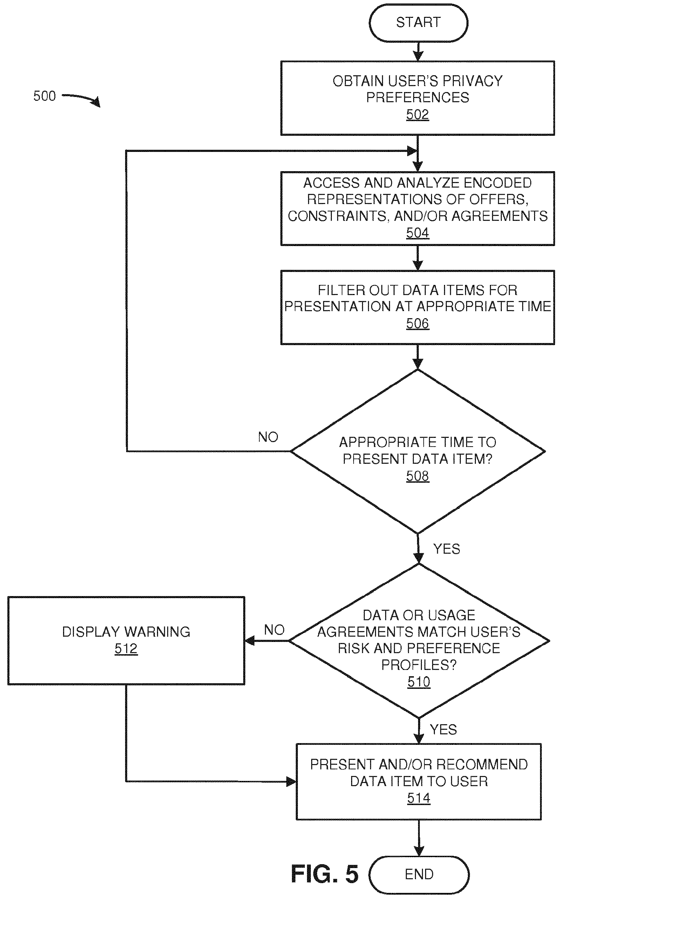

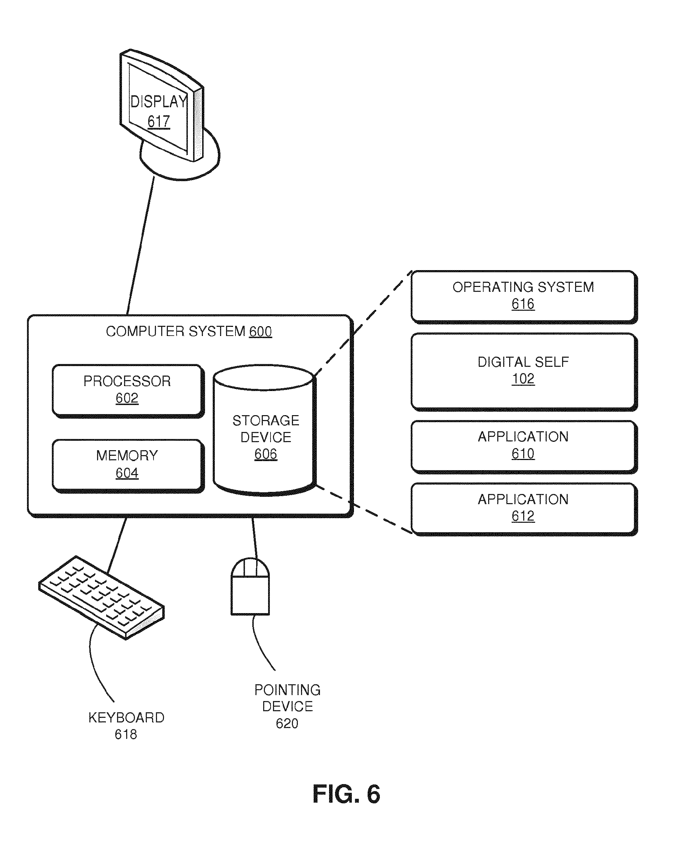

The following figures and accompanying descriptions discuss the digital self and other aspects of the system in greater detail. FIG. 1 illustrates an exemplary architecture of an intelligent digital self system. FIG. 2 illustrates examples of communication with a digital self. FIG. 3 illustrates an exemplary process for generating intelligence components. FIG. 4 illustrates an exemplary process to facilitate self-awareness. FIG. 5 illustrates an exemplary process to filter data items with privacy awareness, and FIG. 6 illustrates an exemplary computer system that executes a digital self.

### System Architecture

FIG. 1 presents a block diagram illustrating an exemplary architecture 100 of an intelligent digital self system, according to an embodiment. In FIG. 1, a user interacts with a digital self through dialogue with an avatar displayed on a front-end. The digital self perceives the user's physical environment (e.g., through cameras and/or other sensors). The system may execute a filtering and retrieval process (e.g., using browser plugins, dedicated applications, and/or proxy servers) to capture the user's personal information exchange with the digital world, and aggregate the personal information into a semantic graph representation. A semantic graph is a network of heterogeneous nodes and links. The semantic graph represents a digital trace of all the user's interactions with the digital world. The system may also store all the captured personal information as personal imprints. A personal imprint is a record of the user's interaction with the digital world.

As illustrated in FIG. 1, a digital self 102 includes a number of intelligence components such as a happiness genome component 104, a self-awareness component 106, and a privacy awareness component 108. These components together make up the intelligence of digital self 102. A front end 110 displays an avatar 112 representing digital self 102. Digital self 102 engages in dialogue with user 103 through avatar 112.

The intelligence components can be a collection of rules that access data from a semantic graph 114 and a personal imprints storage 116. Avatar 112 may also communicate with semantic graph 114. Personal imprints storage 116 store imprints captured from data that user 103 has submitted to a digital world 118. Some implementations may also include a digital imprint dashboard to allow the user to view and modify the data in personal imprints storage 116 and/or semantic graph 114.

Semantic graph 114 is a data structure for storing information associated with the user. Nodes of semantic graph 114 represents semantic entities, and edges represent the relationships between the semantic entities. Semantic entities can be any objects, people or places, including names of people, company names, product names, music titles, the user himself/herself, interests or topics, events and facts. An example of a fact represented as a semantic entity is the amount of weight loss a user has successfully achieved. The system can capture this weight-loss fact when the user tweets about losing his/her weight. The semantic graph can represent the relationships between facts.

A node of the graph may represent the user. The semantic graph can also represent relationships between the user and the user's friends. For example, edges in the semantic graph can represent communications between the user and the user's friends. There may be different types of edges. The edges can also be associated with content, such as higher-level content extracted from the user's interactions. The user can also be associated with a specific weight edge that is decorated with a certain time.

As an example of capturing user data, when the system detects the user tweeting his/her weight or posting his/her weight on a social networking website, the system can capture an imprint and add the imprint information to semantic graph 114. The system also stores the imprint data in personal imprints storage 116. As another example, the system can also detect the user's weight from a pair of electronic glasses that automatically digitizes the user's weight from an analog scale and store that information. Digital self 102 can subsequently retrieve the information from semantic graph 114 and/or personal imprints storage 116 to generate recommendations/warnings and other communications with the user.

Digital self 102 includes a number of components that trigger actions and dialogues with the user. These components are happiness genome component 104, self-awareness component 106, and privacy awareness component 108. Happiness genome component 104 can be a rule base and rule reasoning engine or a mixed model recommender engine. The system uses machine learning, psychology, and social science knowledge to generate a set of rules for digital self 102. Rules are conditional statements with triggers and actions that the system applies against data in order to generate messages and/or perform other action.

The system can compile recent discoveries and expert knowledge from psychology and social sciences into a rule base (e.g., a C Language Integrated Production System (CLIPS)-based rule engine). CLIPS is an expert system tool that provides an environment for the construction of rule and/or object based expert systems. The rule base/rule engine runs on top of semantic graph 114 and personal imprints storage 116. Each rule is associated with a subset of recommendations or a dialogue to get more information or provide counseling. Using machine learning techniques applied to past user interactions with the system, the system can personalize rule triggering and dialogue parameters. As digital self 102 evolves and multiple users initiate their own digital selves, a reinforcement learning mechanism can analyze feedback to reinforce rules that work for other people in similar situations, and associate less successful rules with less importance or weight.

Self-awareness component 106 monitors the user's interactions with the digital world and detects when the user provides information and data to it. Self-awareness component 106 includes a proactive process in which digital self 102 monitors the user's interactions with the digital world and detects when the user provides information and data to it. The system stores a duplicate of each data and information item inside digital self 102, and digital self 102 keeps track of the distribution of the provided information in the digital world by taking note of each data transmission and parsing and being aware of the data use agreement associated with the service receiving the data. Privacy awareness component 108 stores the user's preferences, accesses and analyzes encoded offers, constraints, and agreements, and filters and retrieves data items (e.g., spam offers).

The digital self three intelligence components are geared towards the goals of differentiation, protecting the user's data privacy, and maximizing the user's well-being. Differentiation means differentiating the digital self of the user from anything else. The components collect data to understand and/or define who the user is and what belongs to him in the digital world, and seek to customize digital self 102 for the user and the data that is associated with him/her in the digital world. Digital self 102 will also protect the user's data privacy as much as possible. Further, it seeks to maximize the user's well-being by leveraging fine-grained digital representation and awareness of the user.

### Exemplary Communication with Digital Self

FIG. 2 presents a block diagram 200 illustrating an exemplary communication with the digital self, according to an embodiment. In the scenario depicted in FIG. 2, digital self 102 can detect offers (e.g., coupons) and other spam, and present offers to user 103 when such offers are useful. As illustrated in FIG. 2, screen 202 displays avatar 112 representing digital self 102. Digital self 102 communicates with user 103, and suggests to user 103 that he use a movie ticket coupon 204 that was previously stored in a spam folder.

Also, digital self 102 may advise the user anytime based on analyzing the user's physical environment and/or data stored in semantic graph 114 and/or personal imprints storage 116. Events in the user's physical environment may trigger rules that cause digital self 102 to make a recommendation. Digital self 102 can receive data indicating that the user is planning to perform an activity, and communicate a suggestion to the user to alter and/or supplement the activity with other activities and/or data items (e.g., coupons). As illustrated in FIG. 5, digital self 102 detects Marc eating a bagel and suggests that he call Edwin and eat dinner with Edwin instead.

Digital self 102 may advise user 103 in many different domains. For example, in the user knowledge domain, digital self 102 may track the user's interests and information consumption and advise about reading material, and when to read and for how long to read. In the health domain, digital self 102 may track the user's eating and exercise habits, and advise about what to eat, when to eat, and when to exercise. In the perception, mindfulness, and/or productivity domain, digital self 102 may track the user's activities, measure the user's "presence," and advise about the user's current focus.

In some implementations, digital self 102 may maintain and link different user models for advising on different domains and levels of behavior. For example, digital self 102 may generate immediate data recommendations as well as recommendations on long-term lifestyle, and maintain different user models to allow for advising the user in these different domains and behavior levels.

### Process for Generating Intelligence Components

FIG. 3 presents a flowchart 300 illustrating an exemplary process for generating intelligence components, according to an embodiment. As part of generating digital self 102, the system may compile information to generate rules for the intelligence components, which include happiness genome 104, self-awareness 106, and privacy awareness component 108. The system then continuously improves the set of rules. The system may determine whether the rules are successful, and modify, remove, or generate new rules to improve the effectiveness of the intelligence components.

During operation, the system may initially compile discoveries and knowledge from psychology and social sciences (operation 302). In some implementations, this step may be performed by subroutines that encode the most recent findings in psychology and social sciences and apply those to data mining results from the user's data traces. The subroutines can be mostly hardcoded using expert knowledge. The system generates a collection of rules for a happiness genome component 104, self-awareness component 106, and privacy component (operation 304). The system may collect data on the success rate, the usage percentage, and the acceptance rate of each rule (operation 306).

The system may then modify the collection of rules based on analyzing the success of the current rules, including analyzing factors such as the rule firing frequency (operation 308). The system may generate new rules, delete rules, and/or modify rules (e.g., adjust rule weight) based on the success of the current rules. The system may analyze the success rate of the current rules for the individual user as well as for other users, including all users that have their own digital selves. The system may collect such data anonymously. By regularly updating the rules, the system is enhancing the capabilities of digital self 102.

In one example application, the system can enhance the digital self's ability to reason about the user's health by improving rules regularly. If a user has certain symptoms, the system may apply rules to determine that the user has a certain type of sickness, or that the user is unhappy or depressed. For example, if the user is losing a large percentage of weight over a short time span and is going to the restroom multiple times during the night, the system may apply rules to determine that the user has a certain type of sickness. The system may adapt these rules over a period of time.

The system can continue to improve the collection of rules until the digital self shuts down (operation 310). If the digital self does not shut down, it can continue to collect data and modify the collection of rules, thereby improving the performance of the digital self.

### Process To Facilitate Self-Awareness

FIG. 4 presents a flowchart 400 illustrating an exemplary process to facilitate self-awareness, according to an embodiment. Self-awareness or data awareness refers to the digital self's awareness and association with all of the user's digital information and data. Digital self 102 monitors the user's interaction with the digital world, tracks the user's release of information to the digital world, and stores copies of data that the user distributes to the digital world. This information can be stored in semantic graph 114 and/or personal imprints storage 116. Privacy awareness component 108 can utilize the data to generate recommendations/warnings. Depending on implementation, the system may utilize subroutines and/or rules to perform the operations depicted in FIG. 4.

During operation, the system may monitor user interaction with the digital world (operation 402). For example, the system may monitor the user going online to visit websites. As the user moves among websites, forums, and other digital locations, the system monitors the user's interactions, including data that the user submits to websites, etc. Next, the system may detect the user interacting with and providing data to a service or location in the digital world (operation 404). For example, the system may detect the user submitting information via a website registration form.

The system may track distribution of data and store copies of data provided to the digital world (operation 406). For example, the system may store personal information that a user provides to a website through a fillable form. The system may store the data in semantic graph 114. The system also adds to the user's personal imprints storage 116 as the system obtains data captured from the user's interactions with the digital world.

The system may parse and store data use agreements and/or privacy policies associated with the services and/or locations that the user visits and/or submits data to (operation 408). The system stores data indicating the privacy policies of each service and may warn the user if the service's privacy policy does not match the privacy preferences of the user. For example, some online services may share the user's biographical information with everyone by default. The system may warn the user about privacy implications of releasing user information to those online services. The system may also initiate dialogue with the user before releasing the user's personal information into the digital world. The system may store the personal data, data use agreements, and/or privacy policies in semantic graph 114 and/or personal imprints storage 116 of FIG. 1.

### Process to Filter Data Items with Privacy Awareness

FIG. 5 presents a flowchart 500 illustrating an exemplary process to filter data items with privacy awareness, according to an embodiment. Digital self 102 may assist the user in keeping track of different offers, expiry dates, constraints of purchases, data use agreements, etc. Digital self 102 may filter out data items (e.g., coupon offers) from e-mails, websites, and/or other services the user is accessing. It can then subsequently retrieve and present the filtered data items to the user when the time is appropriate. Furthermore, digital self 102 can also determine whether the data or usage agreements associated with the data items match the user's risk and preference profiles. If not, then digital self 102 displays a warning when presenting the data items to the user. Depending on implementation, the system may utilize subroutines and/or rules to perform the operations depicted in FIG. 5.

During operation, the system may initially obtain a user's privacy preferences (operation 502). The system may learn the user's data and privacy preferences by directly obtaining preference information from the user or by analyzing the user's privacy preferences for different web services. The system may also start with a default set of data and privacy preferences. Next, the system accesses and analyzes encoded representations of offers, constraints, and/or agreements (operation 504). The system may access these encoded representations from network services and/or network locations in the digital world visited by the user.

Digital self 102 serves as a gatekeeper for the user's personal data. If the user is using an online service, and the online service's privacy policy does not match the user's personal preferences, digital self 102 can inform the user of the undesirable privacy settings and/or policies of the online service. Digital self 102 can recommend privacy settings to the user and/or automatically change the privacy settings for user.

The system may filter out data items for presentation at the appropriate time (operation 506). For example, the system may filter out data items such as coupon offers. When the system determines that it is an appropriate time to present the relevant data item (operation 508), the system may also determine whether the data item's associated data or usage agreements match the user's risk and preference profiles (operation 510). If the data item is associated with a data or usage agreement that is inconsistent with the user's preferences for risk and/or privacy preferences, then there is no match. For example, a service may store and own data that the user generates during use, or personal information will be transmitted to third parties. There is no match if the user does not approve of these data and/or privacy policies. If there is no match, then digital self 102 may display a warning (operation 512), and present the data item to the user (operation 514). If there is a match, digital self 102 recommends the data item to the user (operation 514). Note that digital self 102 may engage in a dialogue with user 103 when presenting the data item to the user.

### Exemplary Computer System

FIG. 6 illustrates an exemplary computer system 600 executing a digital self, in accordance with an embodiment. In one embodiment, computer system 600 includes a processor 602, a memory 604, and a storage device 606. Storage device 606 stores a number of applications, such as applications 610 and 612 and operating system 616. Storage device 606 also stores digital self 102 During operation, one or more applications, such as digital self 102, are loaded from storage device 606 into memory 604 and then executed by processor 602. While executing the program, processor 602 performs the aforementioned functions. Computer and communication system 600 may be coupled to an optional display 617, keyboard 618, and pointing device 620.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The foregoing descriptions of various embodiments have been presented only for purposes of illustration and description. They are not intended to be exhaustive or to limit the present invention to the forms disclosed. Accordingly, many modifications and variations will be apparent to practitioners skilled in the art. Additionally, the above disclosure is not intended to limit the present invention.

## Claims

1. A computing system for advising a user, the system comprising:
one or more processors,
a computer-readable medium coupled to the one or more processors having instructions stored thereon that, when executed by the one or more processors, cause the one or more processors to perform operations comprising:
generating a set of rules for a digital representation of the user;
obtaining data indicating the user's digital trace, wherein the digital trace is a data trail associated with the user's interactions in a digital or physical environment; and
applying the rules to the obtained data to generate warnings and/or recommendations; and
communicating the warnings and/or recommendations to the user.

2. The computing system of claim 1, wherein obtaining data indicating the user's digital trace comprises:
receiving data indicating that the user is accessing a location and/or service on the Internet, other network, or in a physical environment;
obtaining copies of the data that the user is submitting to the location and/or service; and
adding the obtained data to a semantic graph and/or storing the obtained data in a personal imprints storage.

3. The computing system of claim 1, wherein the computer-readable storage medium stores additional instructions that, when executed, cause the computer to perform additional steps comprising:
modifying the set of rules based on results of analyzing rule success and/or rule usage.

4. The computing system of claim 1, wherein the computer-readable storage medium stores additional instructions that, when executed, cause the computer to perform additional steps comprising:
filtering data items for presentation at an appropriate time; and
presenting and/or recommending the data item to the user at the appropriate time.

5. The computing system of claim 1, wherein the computer-readable storage medium stores additional instructions that, when executed, cause the computer to perform additional steps comprising:
receiving data indicating that the user is accessing a location and/or service on the Internet, other network, or in a physical environment;
determining the privacy policy of the location and/or service;
determining that the privacy policy of the location and/or service does not match the user's privacy preferences; and
informing the user of the non-matching privacy policy.

6. The computing system of claim 1, wherein the computer-readable storage medium stores additional instructions that, when executed, cause the computer to perform additional steps comprising:
receiving data indicating that the user is planning to perform an activity; and
communicating a suggestion to the user to alter or supplement the activity.
